# EUROPEAN PATENT SPECIFICATION

(11) **EP 0 571 697 B1**
(45) Date of publication and mention of the grant of the patent: **24.04.1996**
(21) Application number: 92830546.5
(22) Date of filing: 01.10.1992
(51) Int. Cl.: B05B 13/02, B65G 45/14, B05B 15/04

(54) **Belt conveyor for paint application systems, with a piece support surface cleaning and paint recovering device**
Förderband für Farbauftragssysteme mit einer Reinigungsvorrichtung für die Förderfläche und einer Farbrückgewinnungsvorrichtung
Bande transporteuse pour systèmes d'application de peinture comprenant un dispositif de nettoyage de la surface de transport et un dispositif de récupération de peinture

(30) Priority: 27.05.1992 IT PS920019 U
(43) Date of publication of application: 01.12.1993
(73) Proprietor: FALCIONI MACCHINE S.r.l., I-61100 Pesaro (IT)
(72) Inventor: Falcioni, Ezio, I-61100 Pesaro (IT)
(74) Representative: Dall'Olio, Giancarlo

(56) References cited:
- EP-A- 0 402 589
- EP-A- 0 425 969
- EP-A- 0 448 080
- DE-A- 2 840 803
- DE-A- 3 227 192
- DE-A- 3 608 812
- FR-A- 1 420 666
- US-A- 4 888 200

## Description

The present invention concerns a belt conveyor for automatic painting systems, equipped with a device that continuously cleans the piece supporting surface from the residual paint, so as to prevent the subsequent pieces to be painted from being soiled, according to the prior art portion of claim 1.

In the automatic painting systems the pieces to be painted are transported by a belt conveyor while they are exposed to the paint spray.

Inevitably, the residual paint gathers on the conveyor and, if it were not removed, it would soil the resting surfaces of the pieces being painted.

The first attempts to clean the belt of the conveyor have been made by means of doctors or scrapers, that were pushed against the surface to be cleaned.

These means have achieved a certain efficacy only with belts constituted by a set of steel belts placed side by side, but they are inadequate in case of continuous belts made of synthetic material.

Yet, the belt or flanked wires conveyors have a further inconvenience, because they allow the paint to infiltrate between the belts or between the wires thus causing the panel inferior surface to be soiled and the paint to be wasted.

To avoid this problem, conveyors with protective covers made of a paper sheet or with single disposable sheets of paper have been used.

In this case the danger of soiling the pieces supporting surfaces was avoided, but the considerable use of paper and the difficulties with its disposal made such a solution disadvantageous. DE-A-3 608 812 discloses a belt conveyor according to the prior art portion of claim 1. The cleaning belt of this system cannot exert a strong and uniform pressure against the surface to be cleaned as this surface is deflected by the cleaning belt.

The object of the invention is to avoid the inconveniences encountered in the prior art.

The object is achieved by means of a paint application system that essentially includes a belt conveyor and a cleaning belt that cleans the conveyor and recovers the paint, according to the characterising part of claim 1.

The cleaning belt is put on edge and is made of steel or another suitable material that extends along a path transversal in respect to the belt conveyor with which it is in contact with a suitable incidence angle, so as to act as a doctor or scraper.

The paint particles gathered on the cleaning belt are made to fall, into a collecting basin, by means of doctors, or picked by other cleaning means.

The collected paint can be sent to a container and then be recycled.

The immediate paint removal, obtained by the claimed invention, allows for a better paint recycling than conventional systems with fixed doctor.

Also a longer duration of the contact surface is achieved with the device made as described in the claims.

The invention is described now in a detailed way, with reference to the accompanying drawings that illustrate only one of its possible embodiments as an example.
Fig. 1 shows a schematic side view of the conveyor with the related cleaning device.
Fig. 2 shows a corresponding view from above.
Fig. 3 shows a view of the conveyor taken from the side where the painted pieces are delivered.

In these figures, the reference numeral 1 indicates the belt conveyor that runs around the rollers 2 and 3.

The numeral 4 indicates a panel to be painted, while numeral 5 indicates the conveyor cleaning belt, that runs around the rollers 6 and 7.

The cleaning belt 5 is put on edge and extends along a path perpendicular or anyway transversal to the one of the conveyor.

An edge of the belt 5 touches, with a suitable pressure and at a proper incidence angle, the inferior surface of the conveyor belt 1 so as to gather, because of crawling, the residual paint that has been set down thereon.

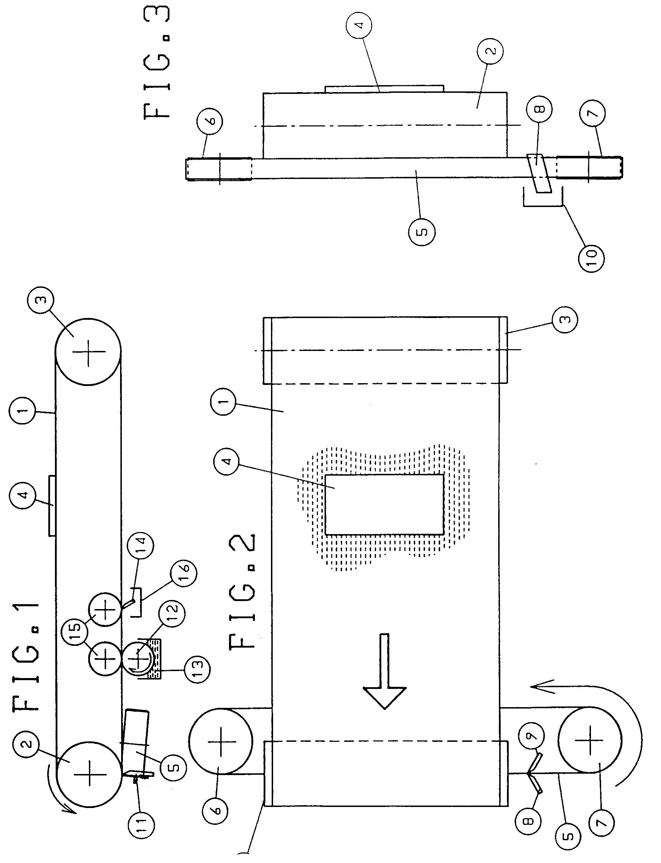

With particular reference to Figure 1, the preferred embodiment of the invention provides that the cleaning belt 5 is placed in correspondence to the roller 2 so as to be able to exert a strong pressure on the surface of the conveyor belt 1 to be cleaned since this latter can be compressed between the edge of the cleaning belt 5 and the surface of the roller 2.

The paint particles collected by the cleaning belt are made to fall down, by means of the doctors 8 and 9, see fig. 2, into the underlying collecting basin 10 showed in fig. 3.

The immediate paint removal, obtained with the moving cleaning belt, allows for a better paint recycling than conventional systems with fixed doctor.

Moreover, longer duration of the contact surface is achieved because the cleaning belt is longer than a fixed doctor.

Numeral 11 of fig. 1, indicates a support element that maintains the cleaning belt tight and assures a uniform pressure of the same against the surface to be cleaned.

The described cleaning device can be integrated with other conventional cleaning means, as shown in fig. 1. In that figure, numeral 12 indicates a roll that cleans the conveyor belt 1 with a solvent contained in the basin 13, while numeral 14 indicates a doctor cleaning and drying the belt humidified with the solvent.

Numeral 15 indicates a counter roll. The paint and solvent removed by the doctor 14 are collected in a basin 16 below and it is possible to send them to a container for a subsequent recycling.

In any case, constructive particulars which are not essential could also be different from the ones described as a mere example, without leaving the scope of the present invention as claimed.

## Claims

1. Belt conveyor for paint application systems with a piece support surface cleaning device, including an endless conveyor belt (1) looped about a pair of rollers (2,3) and an endless cleaning belt (5), put on edge and extending transverse to the path of the conveyor belt (1), and having an edge bearing against said conveyor belt (1), characterised in that the edge of the cleaning belt (5) touches the conveyor belt (1) at the position of one of said rollers (2,3), and in that the cleaning device includes a paint recovering device.

2. Belt conveyor as in Claim 1, characterised in that it further includes a support element (11) for holding and maintaining said cleaning belt (5) tight with uniform pressure and incidence angle against the surface of said conveyor belt (1) to be cleaned.

3. Belt conveyor as in Claim 1, characterised in that it further includes doctors (8,9) acting on said cleaning belt (5), and a basin (10) positioned below said cleaning belt (5) for receiving the collected paint from said doctors (8,9).

4. Belt conveyor as in Claim 1, characterised in that if further includes cleaning means downstream of said cleaning belt (5) for completing the cleaning of said conveyor belt (1).

5. Belt conveyor as in Claim 1, characterised in that said cleaning belt (5) is composed of steel.

6. Belt conveyor as in Claim 1, characterised in that said cleaning belt (5) is perpendicular to said conveyor belt (1).

## Patentansprüche

1. Förderband für Anstrichstoff-Auftragesysteme mit einer Vorrichtung zur Reinigung der Werkstückauflagefläche, bestehend auch einem endlosen Förderband (1), das um zwei Walzen (2,3) geführt ist, und einem endlosen Reinigungsband (5), das winkelig dazu angeordnet ist und quer zur Laufrichtung des Förderbandes (1) verläuft, wobei eine Kante des Reinigungsbandes (5) gegen das Förderband (1) drückt; dadurch gekennzeichnet, daß die Kante des Reinigungsbandes (5) das Förderband (1) an einer der beiden Walzen (2,3) berührt und daß die Reinigungsvorrichtung eine Vorrichtung zur Anstrichstoffrückgewinnung beinhaltet.

2. Förderband entsprechend Anspruch 1, dadurch gekennzeichnet, daß außerdem ein Halteelement (11) vorgesehen ist, das dazu dient, das genannte Reinigungsband (5) fest und mit gleichmäßigem Druck und Neigungswinkel gegen die Oberfläche des zu reinigenden Förderbandes (1) zu halten.

3. Förderband entsprechend Anspruch 1, dadurch gekennzeichnet, daß außerdem Abstreifvorrichtungen (8,9) an dem Reinigungsband (5) vorgesehen sind und daß unter dem Reinigungsband (5) ein Auffangbehälter (10) angeordnet ist, in dem der von den Abstreifern (8,9) aufgenommene Anstrichstoff gesammelt wird.

4. Förderband entsprechend Anspruch 1, dadurch gekennzeichnet, daß außerdem hinter dem Reinigungsband (5) eine Reinigungsvorrichtung zur vollständigen Säuberung des Förderbandes (1) angeordnet ist.

5. Förderband entsprechend Anspruch 1, dadurch gekennzeichnet, daß das genannte Reinigungsband (5) aus Stahl gefertigt ist.

6. Förderband entsprechend Anspruch 1, dadurch gekennzeichnet, daß das genannte Reinigungsband (5) rechtwinklig zum genannten Förderband (1) angeordnet ist.

## Revendications

1. Convoyeur à bande pour système d'application de peinture doté d'un dispositif de nettoyage de la surface du support de la pièce, comprenant un convoyeur à bande sans fin (1) s'enroulant autour d'une paire de rouleaux (2 ,3) et une bande nettoyante sans fin (5), placée sur le bord et disposée transversalement au parcours de ladite bande du convoyeur (1), et dont l'un des bords porte contre ladite bande du convoyeur (1), caractérisé en ce que le bord de la bande nettoyante (5) touche la bande du convoyeur (1) à la hauteur de l'un desdits rouleaux (2, 3), et en ce que le dispositif de nettoyage comprend un dispositif de récupération de la peinture.

2. Convoyeur à bande tel qu'à la revendication 1, caractérisé en ce qu'il comprend en outre un élément de support (11) destiné à soutenir et à maintenir ladite bande nettoyante (5) tendue à une pression et selon un angle d'incidence uniformes contre la surface de ladite bande du convoyeur (1) à nettoyer.

3. Un convoyeur à bande tel qu'à la revendication 1, caractérisé en ce qu'il comprend en outre des racloirs (8, 9) agissant sur ladite bande nettoyante (5) et un bac placé sous ladite bande nettoyante (5), destiné à recevoir la peinture collectée par lesdits racloirs (8, 9).

4. Un convoyeur à bande tel qu'à la revendication 1, caractérisé en ce qu'il comprend en outre un dispositif de nettoyage en aval de ladite bande nettoyante (5), destiné à compléter le nettoyage de ladite bande du convoyeur (1).

5. Un convoyeur à bande tel qu'à la revendication 1, caractérisé en ce que ladite bande nettoyante (5) est exécutée en acier.

6. Un convoyeur à bande tel qu'à la revendication 1, caractérisé en ce que ladite bande nettoyante (5) est perpendiculaire à ladite bande du convoyeur (1).
